(19) Europäisches Patentamt
European Patent Office
Office européen des brevets

(11) **EP 2 110 269 A1**

(12) **EUROPEAN PATENT APPLICATION**

(43) Date of publication:
**21.10.2009 Bulletin 2009/43**

(51) Int Cl.:
**B60C 23/06** *(2006.01)*

(21) Application number: **09003758.1**

(22) Date of filing: **16.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **16.04.2008 JP 2008106616**

(71) Applicant: **Sumitomo Rubber Industries, Ltd.**
**Kobe-shi**
**Hyogo-ken (JP)**

(72) Inventor: **Miyamoto, Kazuyoshi**
**Kobe-shi**
**Hyogo 6510072 (JP)**

(74) Representative: **Manitz, Finsterwald & Partner GbR**
**Postfach 31 02 20**
**80102 München (DE)**

(54) **Method and apparatus for detecting decrease in tire air pressure and program for determing decrease in tire air pressure**

(57)    A method of detecting a decrease in a tire air pressure based on wheel rotation information obtained from tires attached to a four-wheel vehicle. The method includes: a step of calculating wheel rotation information obtained from the respective wheel tires; a step of computing the first to the third judgment values DEL1, DEL2, and DEL3; a step of storing the wheel rotation information, the first judgment value, the second judgment value, and the third judgment value; a step of setting judgment conditions for the first judgment value, the second judgment value, and the third judgment value with regard to the respective wheel tires; and a step of judging, based on the judgment conditions, a decrease in the air pressures of the respective wheel tires. The step of setting the judgment condition sets threshold values used for the judgment conditions depending on a status of a road on which a vehicle runs, a turning level of the vehicle, or a level of the running of the vehicle running on an uphill or a downhill.

FIG. 1

**Description**

**BACKGROUND OF THE INVENTION**

1. Field of the Invention

The present invention relates to a method and an apparatus for detecting a decrease in a tire air pressure and a program for determining a decrease in a tire air pressure. In particular, the present invention relates to a method and an apparatus for detecting a decrease in a tire air pressure by which a position of a tire having a decreased pressure can be identified, and a program for determining a decrease in a tire air pressure.

2. Description of the Related Art

Conventionally, an apparatus for detecting a decrease in a tire air pressure uses a principle according to which a tire having a decreased pressure shows a reduced outer diameter (tire dynamic loaded radius) compared to that of tires having a normal air pressure and thus shows an increased angular velocity (wheel speed) compared to that of other normal tires. In the case of a method of detecting a decrease in an air pressure based on a relative difference in a tire wheel speed for example, a judgment value DEL obtained by $DEL = \{(V1+V4)/2 - (V2+V3)/2\}/\{(V1+V2+V3+V4)/4\} \times 100$ (%) is used. When an absolute value of this DEL exceeds an alarming threshold value, a decreased pressure alarm is raised (see Japanese Unexamined Patent Publication No. 305011/1988 for example). The reference numerals V1 to V4 represent the wheel speeds of a left front wheel tire, a right front wheel tire, a left rear wheel tire, and a right rear wheel tire, respectively.

When the judgment value DEL as described above is used to judge a decreased pressure of a tire, a tire slip rate caused during driving changes due to an unbalanced load for example. In this case, the DEL, which is calculated based on a relative difference in the wheel speed, cannot exclude the influence by the slip rate, consequently causing a wrong judgment of a decreased pressure in spite of a normal pressure.

To solve this, a method of detecting a decrease in a tire air pressure has been proposed according to which three judgment values DEL1, DEL2, and DEL3 can be used to raise a decreased pressure alarm and to identify a position of a wheel having a decreased pressure while avoiding a false judgment (see Japanese Unexamined Patent Publication No. 2005-53263). The judgment value DEL1 is obtained by dividing, by a predetermined average wheel speed, a difference of the sum of the wheel rotation information between two pairs of wheel tires on diagonal lines. The judgment value DEL2 is obtained by dividing, by a predetermined average wheel speed, a difference between a sum of the wheel rotation information for front wheel tires and a sum of the wheel rotation information for rear wheel tires. The judgment value DEL3 is obtained by dividing, by a predetermined average wheel speed, a difference between a sum of the wheel rotation information for right wheel tires and a sum of the wheel rotation information for left wheel tires.

According to the method of Japanese Unexamined Patent PublicationNo. 2005-53263, a false judgment due to an unbalanced load for example can be avoided and a position of a wheel having a decreased pressure can be identified. However, since the threshold values of the three judgment values DEL1, DEL2, and DEL3 are selected uniquely, a case may be caused where some status of a road on which a vehicle is running (e.g., general pavement road, snowy road) for example causes a wrong identification of a position of a wheel having a decreased pressure.

SUMMARY OF THE INVENTION

The present invention has been made in view of the situation as described above. It is an object of the present invention to provide a method and an apparatus for detecting a decrease in a tire air pressure by which a wrong identification of a position of a wheel having a decreased pressure can be avoided, and a program for determining a decrease in a tire air pressure.

In accordance with the present invention, there is provided a method of detecting a decrease in a tire air pressure based on wheel rotation information obtained from tires attached to a four-wheel vehicle including:

a step of calculating wheel rotation information obtained from the respective wheel tires;
a step of computing a first judgment value obtained by dividing a difference in the sum of wheel rotation information between two pairs of wheel tires on diagonal lines by a predetermined average wheel speed, a second judgment value obtained by dividing a difference between a sum of wheel rotation information of front wheel tires and a sum of wheel rotation information of rear wheel tires by a predetermined average wheel speed, and a third judgment value obtained by dividing a difference between a sum of wheel rotation information of right wheel tires and a sum of wheel rotation information of left wheel tires by a predetermined average wheel speed;
a step of storing the wheel rotation information, the first judgment value, the second judgment value, and the third judgment value;

a step of setting judgment conditions for the first judgment value, the second judgment value, and the third judgment value with regard to the respective wheel tires; and

a step of judging, based on the judgment conditions, a decrease in the air pressures of the respective wheel tires,

wherein the step of setting the judgment condition sets threshold values used for the judgment conditions depending on a status of a road on which a vehicle runs, a turning level of the vehicle, or a level of the running of the vehicle running on an uphill or a downhill.

According to the method of detecting a decrease in a tire air pressure of the present invention, threshold values used for the judgment conditions are set depending on a status of a road on which a vehicle runs, a turning level of the vehicle, or a level of the running of the vehicle running on an uphill or a downhill. Thus, an influence by the variation in the judgment value due to factors other than a decreased pressure can be excluded and a position of a tire actually having a decreased pressure can be identified accurately. This can consequently avoid a case where a position of a wheel having a decreased pressure is identified in a wrong manner.

In accordance with the present invention, there is further provided an apparatus of detecting a decrease in a tire air pressure based on wheel rotation information obtained from tires attached to a four-wheel vehicle including:

a rotation information detection means for calculating wheel rotation information obtained from the respective wheel tires;

a judgment value computation means for computing a first judgment value obtained by dividing a difference in the sum of wheel rotation information between two pairs of wheel tires on diagonal lines by a predetermined average wheel speed, a second judgment value obtained by dividing a difference between a sum of wheel rotation information of front wheel tires and a sum of wheel rotation information of rear wheel tires by a predetermined average wheel speed, and a third judgment value obtained by dividing a difference between a sum of wheel rotation information of right wheel tires and a sum of wheel rotation information of left wheel tires by a predetermined average wheel speed;

a storage means for storing the wheel rotation information, the first judgment value, the second judgment value, and the third judgment value;

a judgment condition setting means for setting judgment conditions for the first judgment value, the second judgment value, and the third judgment value with regard to the respective wheel tires; and

a judgment means for judging, based on the judgment conditions, a decrease in the air pressures of the respective wheel tires,

wherein the judgment condition setting means sets threshold values used for the judgment conditions depending on a status of a road on which a vehicle runs, a turning level of the vehicle, or a level of the running of the vehicle running on an uphill or a downhill.

According to the apparatus for detecting a decrease in a tire air pressure of the present invention, threshold values used for the judgment conditions are set depending on a status of a road on which a vehicle runs, a turning level of the vehicle, or a level of the running of the vehicle running on an uphill or a downhill. Thus, an influence by the variation in the judgment value due to factors other than a decreased pressure can be excluded and a position of a tire actually having a decreased pressure can be identified accurately. This can consequently avoid a case where a position of a wheel having a decreased pressure is identified in a wrong manner.

In accordance with the present invention, there is yet further provided a program for determining a decrease in a tire air pressure for causing, in order to detect a decrease in a tire air pressure based on wheel rotation information obtained from tires attached to a four-wheel vehicle, a computer to function as:

a rotation information detection means for calculating wheel rotation information obtained from the respective wheel tires;

a judgment value computation means for computing a first judgment value obtained by dividing a difference in the sum of wheel rotation information between two pairs of wheel tires on diagonal lines by a predetermined average wheel speed, a second judgment value obtained by dividing a difference between a sum of wheel rotation information of front wheel tires and a sum of wheel rotation information of rear wheel tires by a predetermined average wheel speed, and a third judgment value obtained by dividing a difference between a sum of wheel rotation information of right wheel tires and a sum of wheel rotation information of left wheel tires by a predetermined average wheel speed;

a storage means for storing the wheel rotation information, the first judgment value, the second judgment value, and the third judgment value;

a judgment condition setting means for setting judgment conditions for the first judgment value, the second judgment value, and the third judgment value with regard to the respective wheel tires; and

a judgment means for judging, based on the judgment conditions, a decrease in the air pressures of the respective wheel tires,

wherein the judgment condition setting means sets threshold values used for the judgment conditions depending on a status of a road on which a vehicle runs, a turning level of the vehicle, or a level of the running of the vehicle running on an uphill or a downhill.

BRIEF DESCRIPTION OF THE DRAWINGS

Fig. 1 is a block diagram illustrating one embodiment of an apparatus for detecting a decrease in a tire air pressure of the present invention;
Fig. 2 is a block diagram illustrating an electrical configuration of the apparatus for detecting a decrease in a tire air pressure shown in Fig. 1;
Fig. 3 is a flowchart illustrating one embodiment of a detection method of the present invention;
Fig. 4 illustrates the distribution of average values of the judgment value DEL3 for a vehicle running on a snowy road;
Fig. 5 illustrates the distribution of average values of the judgment value DEL3 for a vehicle running on a general pavement road (including many straight roads).

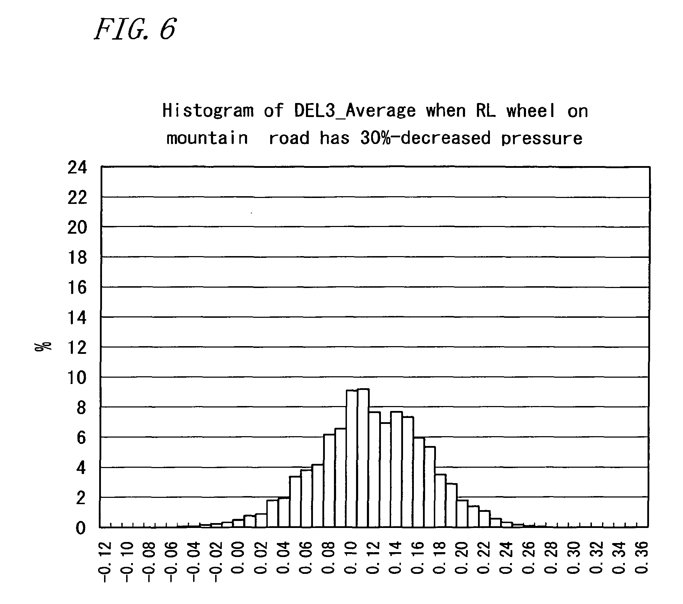

Fig. 6 illustrates the distribution of average values of the judgment value DEL3 for a vehicle running on a mountain road;
Figs. 7(a) and 7(b) illustrate that different courses show different distributions of turning radii in which Fig. 7 (a) illustrates the distribution of turning radii for a course having many straight roads, and Fig. 7(b) illustrates the distribution of turning radii for a mountain course having few straight roads;
Figs. 8(a) and 8(b) illustrate that different courses show different distributions of lateral Gs. in which Fig. 8 (a) illustrates the distribution of lateral Gs for a course having many straight roads, and Fig. 8(b) illustrates the distribution of lateral Gs for a mountain course having few straight roads.

DETAILED DESCRIPTION

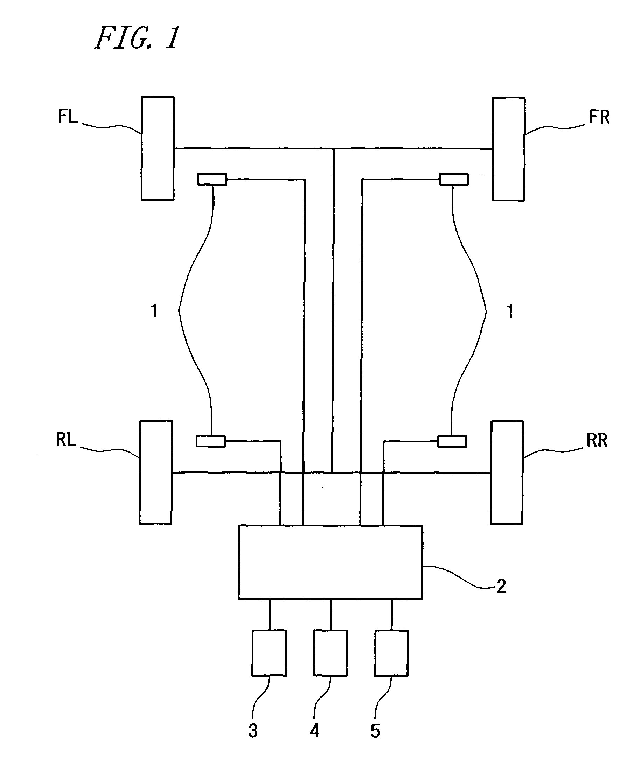

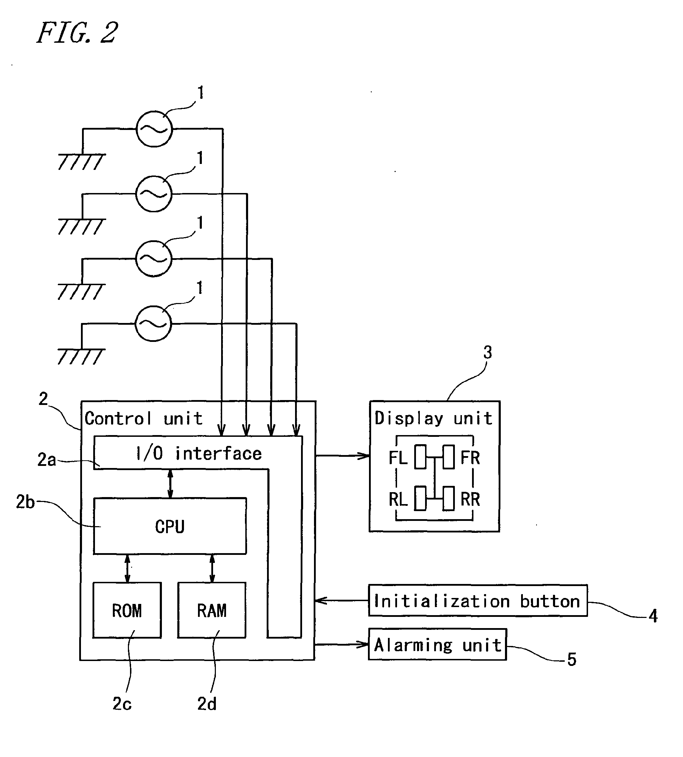

Hereinafter, with reference to the attached drawings, an embodiment of a method and an apparatus for detecting a decrease in a tire air pressure and a program for determining a decrease in a tire air pressure of the present invention will be described in detail.
As shown in Fig. 1, the apparatus for detecting a decrease in a tire air pressure according to one embodiment of the present invention includes, in order to detect wheel rotation information regarding four tires provided in a four-wheel vehicle (FL (left front wheel), FR (right front wheel), RL (left rear wheel), and RR (right rear wheel)), a normal wheel speed detection means (wheel rotation information detection means) 1 provided in association with the respective tires.
The wheel speed detection means 1 may be, for example, a wheel speed sensor that uses an electromagnetic pickup for example to generate a rotation pulse to measure an angular velocity and a wheel speed based on the number of pulses or an angular velocity sensor such as the one that generates power using rotation as in a dynamo to measure an angular velocity and a wheel speed based on this voltage. The output from the wheel speed detection means 1 is given to a control unit 2 that is a computer such as ABS. This control unit 2 is connected to a display unit 3 composed of a liquid crystal display element, a plasma display element or CRT for example for displaying a tire having a decreased internal pressure, an initialization button 4 that can be operated by a driver, and an alarming unit 5 for notifying a driver of a tire having a decreased internal pressure.
As shown in Fig. 2, the control unit 2 is composed of: an I/O interface 2a required for the exchange of a signal with an external apparatus; a CPU 2b functioning as a computation processing center; a ROM 2c storing therein a control operation program of this CPU 2b; and a RAM 2d to which data is temporarily written when the CPU 2b performs a control operation or from which the written data is read out.
The wheel speed detection means 1 outputs a pulse signal corresponding to the rotation number of a tire (hereinafter also referred to as "wheel speed pulse"). The CPU 2b calculates, based on the wheel speed pulse outputted from the wheel speed detection means 1, angular velocities Fi of the respective tires at every predetermined sampling cycle $\Delta T(sec)$ (e.g., $\Delta T=0.05$ second).
By the way, tires are manufactured to include variation within a standard (initial difference). Thus, the effective rolling radii of the respective tires (values obtained by dividing a travel distance for one rotation by $2\pi$) are not always equal even when all of the tires have a regular internal pressure. This causes variation in the angular velocity Fi of the respective tires. There is a method to exclude an influence by the initial difference from the angular velocity Fi for example. This method firstly calculates the following initial correction coefficients K1, K2, and K3.

$$K1=F1/F2 \cdots (1)$$

$$K2=F3/F4 \cdots (2)$$

$$K3=(F1+K1 \times F2)/(F2+K2 \times F4) \cdots (3)$$

Next, these calculated initial correction coefficients K1, K2, and K3 are used to calculate a new angular velocity $F1_i$ as shown in the formulae (4) to (7).

$$F1_1=F1 \cdots (4)$$

$$F1_2=K1 \times F2 \cdots (5)$$

$$F1_3=K3 \times F3 \cdots (6)$$

$$F1_4=K2 \times K3 \times F4 \cdots (7)$$

Here, the initial correction coefficient K1 is a coefficient to correct a difference in the effective rolling radius due to an initial difference between left front and right front tires. The initial correction coefficient K2 is a coefficient to correct a difference in the effective rolling radius due to an initial difference between left rear and right rear tires. The initial correction coefficient K3 is a coefficient to correct a difference in the effective rolling radius due to an initial difference between a left front tire and a left rear tire. Based on the $F1_i$, wheel speeds Vi of the respective tires are calculated.

In this embodiment, a tire having a decreased pressure is judged by the following three judgment values DEL1, DEL2, and DEL3.

(1) As shown in the following formula (8), the judgment value DEL1 is a ratio obtained in the following manner. First, a difference in the wheel speed of two pairs of wheel tires on diagonal lines is calculated by subtracting a sum (total) in the wheel speed of one pair of wheel tires from that of the other pair of wheel tires. Then, this difference is divided by the average wheel speed of the four wheel tires (average value of the two totals of the wheel speeds).

$$DEL1=\{(V1+V4)/2-(V2+V3)/2\}/(Vmean) \times 100 (\%) \cdots (8)$$

Here, V1 to V4 denote the wheel speeds of a left front wheel tire, a right front wheel tire, a left rear wheel tire, and a right rear wheel tire, respectively. Vmean means (V1+V2+V3+V4)/4.

(2) As shown in the following formula (9), the judgment value DEL2 is a ratio obtained by dividing a difference between the sum of the wheel speeds of the front wheel tires and the sum of the wheel speeds of the rear wheel tires (difference between the two sums) by the average wheel speed of the four wheel tires.

$$DEL2=\{(V1+V2)/2-(V3+V4)/2\}/(Vmean) \times 100 (\%) \cdots (9)$$

(3) As shown in the following formula (10), the judgment value DEL3 is a ratio obtained by dividing a difference between the sum of the wheel speeds of the right wheel tires and the sum of the wheel speeds of the left wheel tires (difference between the two sums) by the average wheel speed of the four wheel tires.

$$\mathtt{DEL3=\{(V1+V3)/2-(V2+V4)/2\}/(Vmean)\times100(\%)\cdots\cdots(10)}$$

Next, with regard to each of the wheel tires, three conditions for judging a decreased air pressure are separately set as shown below. According to the judgment conditions, in the case of the left front wheel tire FL for example, V1s for DEL1, DEL2, and DEL3 are all positive. Thus, when the left front wheel tire FL has a decreased air pressure, V1s for DEL1, DEL2, and DEL3 are all positive. DEL1_Average, DEL2_Average, and DEL3_Average denote average values of predetermined number of DEL1, DEL2, and DEL3, respectively. FDth_DEL1_selected and RDth_DEL1_selected are a front wheel alarming threshold value and a rear wheel alarming threshold value of DEL1 set depending on the status of a road on which a vehicle runs as described later. Other factors such as FDth_DEL2_selected are also a threshold value set for DEL2 or DEL3.

(i) A judgment condition A1 for judging a decreased air pressure of the left front wheel tire FL is:

DEL1_Average>FDth_DEL1_selected (>0)
DEL2_Average>FDth_DEL2_selected (>0)
DEL3_Average>FDth_DEL3_selected (>0)

(ii) A judgment condition A2 for judging a decreased air pressure of the right front wheel tire FR is:

DEL1_Average<-FDth_DEL1_selected (<0)
DEL2_Average>FDth_DEL2_selected (>0)
DEL3_Average<-FDth_DEL3_selected (<0)

(iii) A judgment condition A3 for judging a decreased air pressure of the left rear wheel tire RL is:

DEL1_Average<-RDth_DEL1_selected (<0)
DEL2_Average<-RDth_DEL2_selected (<0)
DEL3_Average>RDth_DEL3_selected (>0)

(iv) A judgment condition A4 for judging a decreased air pressure of the right rear wheel tire RR is:

DEL1_Average>RDth_DEL1_selected (>0)
DEL2_Average<-RDth_DEL2_selected (<0)
DEL3_Average<-RDth_DEL3_selected (<0)

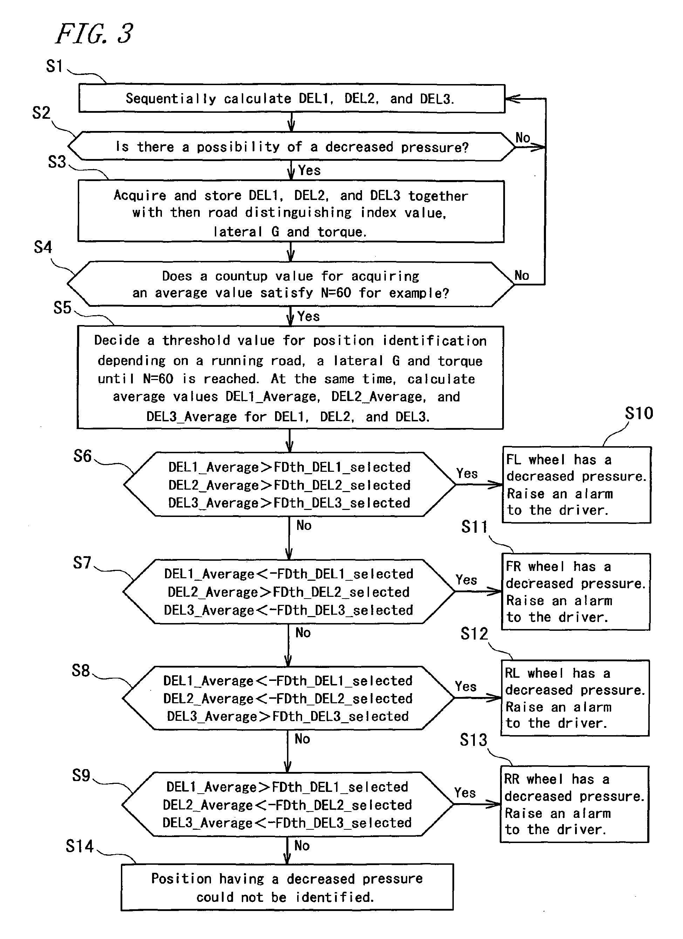

Next, the following section will describe, with reference to the flowchart shown in Fig. 3, an embodiment of the method of detecting a decrease in a tire air pressure of the present invention.

(1) First, based on the angular velocities Fi of the respective tires calculated based on wheel speed pulses outputted from a wheel speed detection means, the formulae (4) to (7) are used to calculate angular velocities $Fi_i$ from which an influence by an initial difference is excluded. Based on the angular velocities $Fi_i$, velocities V1 to V4 of the respective wheels are calculated. Then, the resultant V1 to V4 are subjected to the formulae (8) to (10) to sequentially calculate DEL1, DEL2, and DEL3 (Step S1).

(2) Next, Step S2 determines whether there is a possibility where any tire has a decreased air pressure or not. For example, when DEL1 that is one of the three judgment values is higher than DEL1_Deflation_Threshold that is a threshold value for judging a decreased air pressure, it is determined that there is a possibility of a decreased pressure and the processing proceeds to Step S3. When it is determined that there is no possibility of a decreased pressure on the other hand, the processing returns to Step S1.

(3) Next, Step S3 acquires the DEL1, DEL2, and DEL3 as well as a road distinguishing index value, a lateral G, and a wheel torque to store the data in a storage means. The road distinguishing index value is an index value showing the status of a road on which vehicle is running and may be, for example, a road friction coefficient. This road friction coefficient can be obtained, for example, by calculating a slip amount based on a wheel rotation velocity. The road status also can be distinguished based on the variation in the wheel speed of the respective four wheels. In this case, a statistical index showing the variation level (e. g., angular acceleration of wheel rotation velocity) is used as a road distinguishing index value.

The lateral G can be obtained, for example, by a lateral acceleration sensor attached to a vehicle. The wheel torque can be obtained based on a value of a sensor attached to a side slip prevention apparatus.

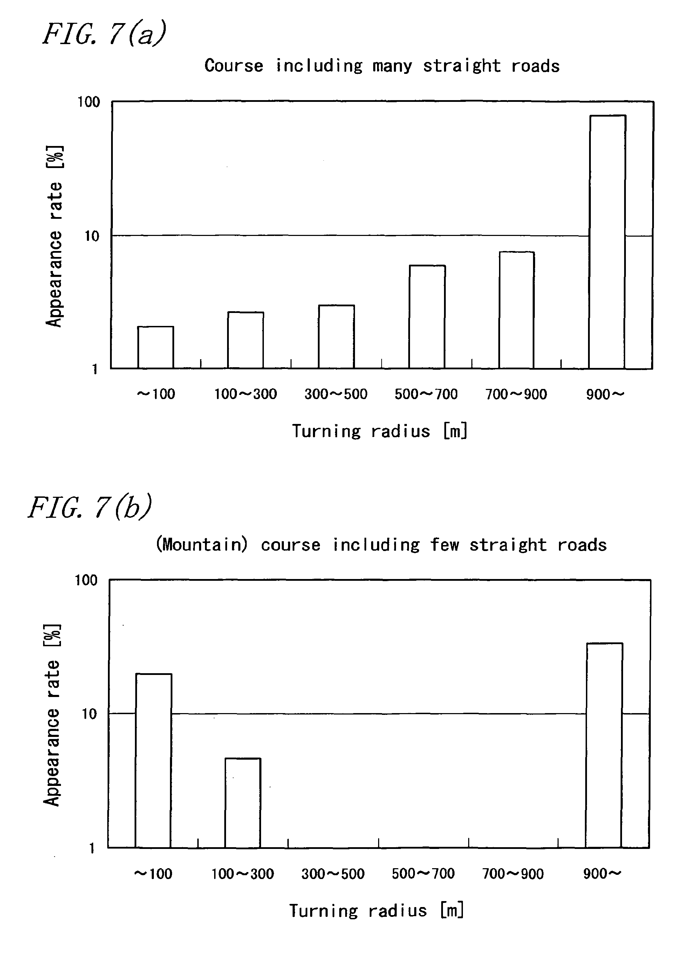

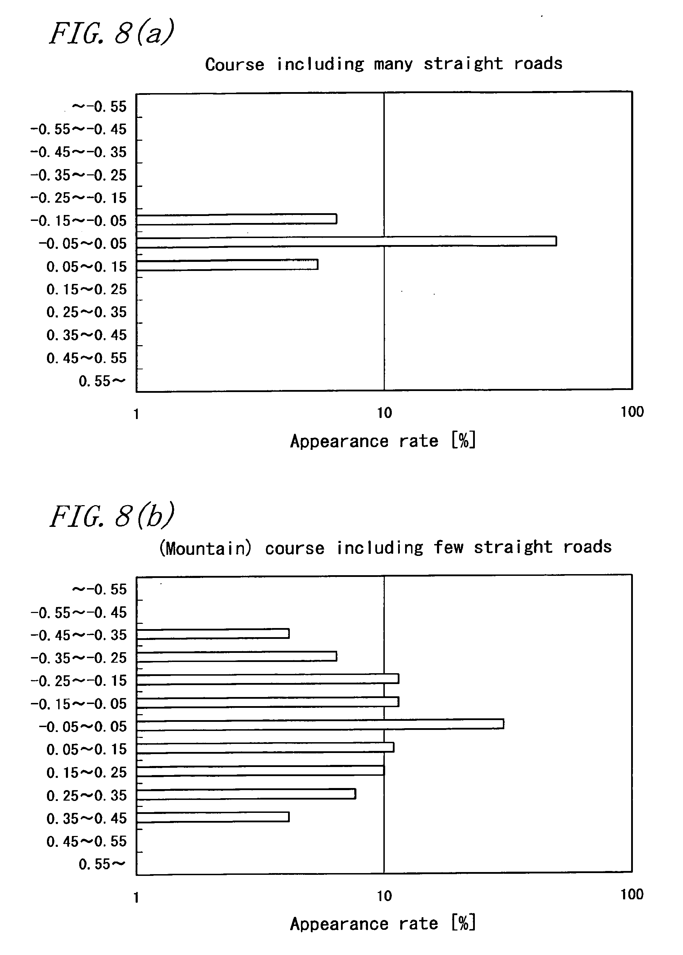

The value of the lateral G or the turning radius can be used to determine, for example, whether the vehicle is running on a general pavement road having many straight roads or on a mountain road having few straight roads. Figs. 7 (a) and 7 (b) illustrate that the distribution of the turning radius is different depending on a running course in which Fig. 7(a) illustrates the distribution of turning radii regarding a course having many straight roads and Fig. 7(b) illustrates the distribution of turning radii regarding a course having few straight roads. Figs. 8(a) and 8(b) illustrate that the distribution of lateral Gs is different depending on a running course in which Fig. 8 (a) illustrates the distribution of the lateral Gs regarding a course having many straight roads and Fig. 8(b) illustrates the distribution of the lateral Gs regarding a course having few straight roads. As can be seen from Figs. 7(a) and 7(b) and Figs. 8(a) and 8(b), whether a running course is a course having many straight roads or a mountain course having few straight roads can be distinguished based on the turning radii and lateral Gs.

The same applies to a wheel torque. Torques required for the respective velocities on a flat road are calculated in advance and stored. When there is frequently a significant difference between the stored values and torque values at the velocities at a certain moment during running, it can be distinguished that the vehicle is running on an uphill or a downhill.

(4) Next, Step S4 determines whether the judgment value reaches a number set in advance in order to acquire an average value (e.g., N=60) or not. When the judgment value does not reach the number, the processing returns to Step S1. When the judgment value reaches the number, the processing proceeds to Step S5.

(5) Next, Step S5 calculates the respective average values of DEL1, DEL2, and DEL3. Depending on a running road and levels of the lateral G and wheel torque until the predetermined number of judgment values is accumulated, a threshold value for position identification such as FDth_DEL1_selected as described above is set. This threshold value for position identification can be decided through an actual vehicle test in advance as explained in an embodiment (which will be described later). Specifically, a vehicle having a specific wheel having a decreased air pressure is caused to run on a general pavement road, a snowy road, a mountain path, an uphill road, a downhill road, or a circular road for example and the resultant judgment values DEL1, DEL2, and DEL3 are accumulated. Then, based on the distribution status (variation level) of the respective judgment values, such threshold values are set that reduce a probability of a false judgment for identifying a wheel having a decreased air pressure based on the judgment conditions A1 to A4. For example, when judgment values have a regular distribution, since a range of values $\pm 4.5$ times the standard deviation with the average value at the center (=4.5σ) includes 99.9993% of the entirety, a value at the boundary of the range of 4.5σ can be set as a threshold value to avoid a false judgment with substantially a 100% probability.

(6) Next, the threshold value for position identification set in Step S5 is used to identify a position of a wheel having a decreased air pressure. For example, whether the following judgment condition A1 is satisfied or not is judged. When the judgment condition A1 is satisfied, it is determined that the left front wheel (FL wheel) has a decreased pressure to raise an alarm to a driver (Step S10). When the judgment condition A1 is not satisfied, the processing proceeds to Step S7.

Judgment condition A1
DEL1_Average>FDth_DEL1_selected (>0)
DEL2_Average>FDth_DEL2_selected (>0)
DEL3_Average>FDth_DEL3_selected (>0)

(7) Step S7 judges whether the following judgment condition A2 is satisfied or not. When the judgment condition A2 is satisfied, it is determined that the right front wheel (FR wheel) has a decreased pressure to raise an alarm to the driver (Step S11). When the judgment condition A2 is not satisfied, the processing proceeds to Step S8.

Judgment condition A2
DEL1_Average<-FDth_DEL1_selected (<0)
DEL2_Average>FDth_DEL2_selected (>0)
DEL3_Average<-FDth_DEL3_selected (<0)

(8) Step S8 judges whether the following judgment condition A3 is satisfied or not. When the judgment condition A3 is satisfied, it is determined that the left rear wheel (RL wheel) has a decreased pressure to raise an alarm to the driver (Step S12). When the judgment condition A3 is not satisfied, the processing proceeds to Step S9.

Judgment condition A3
DEL1_Average<-RDth_DEL1_selected (<0)
DEL2_Average<-RDth_DEL2_selected (<0)
DEL3_Average>RDth_DEL3_selected (>0)

(9) Step S9 judges whether the following judgment condition A4 is satisfied or not. When the judgment condition A4 is satisfied, it is determined that the right rear wheel (RR wheel) has a decreased pressure to raise an alarm to the driver (Step S13). When the judgment condition A4 is not satisfied, it is determined that the position having a decreased pressure is not identified (Step S14).

Judgment condition A4
DEL1_Average>RDth_DEL1_selected (>0)
DEL2_Average<-RDth_DEL2_selected (<0)
DEL3_Average<-RDth_DEL3_selected (<0)

Next, an embodiment of a method of detecting a decrease in a tire internal pressure of the present invention will be described. However, the present invention is not limited to such embodiments.

In the embodiments and comparative examples described later, DEL1 and DEL3 among the three judgment values are used to identify a position of a wheel having a decreased air pressure. When DEL2 has a higher variation than those of the other judgment values, the method of identifying a position based on the two judgment values in this manner also can be used.

Specifically, when DEL1 and DEL3 are used to identify a position of a wheel having a decreased air pressure and when the FL wheel has a decreased air pressure, the following judgment condition B1 is used.

Judgment condition B1
DEL1_Average>FDth_DEL1 and
DEL3_Average>FDth_DEL3
When the FR wheel has a decreased air pressure, the following judgment condition B2 is used.

Judgment condition B2
DEL1_Average<-FDth_DEL1 and
DEL3_Average<-FDth_DEL3
When the RL wheel has a decreased air pressure, the following judgment condition B3 is used.

Judgment condition B3
DEL1_Average<-FDth_DEL1 and
DEL3_Average>FDth_DEL3
When the RR wheel has a decreased air pressure, the following judgment condition B4 is used.

Judgment condition B4
DEL1_Average>FDth_DEL1 and
DEL3_Average<-FDth_DEL3

[Comparative Example]

When a two-wheel driving test vehicle A with a RL wheel having a 30%-decreased air pressure was caused to run on a flat straight course, the result was DEL1_Average=-0.12 and DEL3_Average=0.12 (N=60).

As threshold values of determining formulae for identifying a position of a wheel having a decreased air pressure, FDth_DEL1=RDth_DEL1=0.04 and FDth_DEL3=RDth_DEL3=0.04 were uniquely set.

In this case, the following formulae are established for a general expressway having a pavement road.
DEL1_Average<-RDth_DEL1
DEL3_Average>RDth_DEL3
Thus, a position having a decreased air pressure (RL wheel) could be identified accurately.

On the other hand, with regard to the test vehicle A running on a snowy road, some result showed DEL3_Average=-0.043<-0.04=-RDth_DEL3=-FDth_DEL3 for example. Thus, it could not be identified that the RL wheel was a wheel having a decreased air pressure. Moreover, the result was DEL1_Average<-0.04=-RDth_DEL1=-FDth_DEL1 and DEL3_Average=-0.043<-0.04=-RDth_DEL3=-FDth_DEL3.
Consequently, it was falsely determined that the FR wheel had a wheel having a decreased air pressure.

[Embodiment]

In order to avoid the false determination as described above, the status of a running road until the judgment of a decreased pressure was distinguished and RDth_DEL3=0.04 was set for a general pavement road as in the comparative example. For the running on a snowy road, RDth_DEL3 was changed to RDth_DEL3=0.08.

As a result, the running on a snowy road was resulted in:

DEL1_Average<-0.04=-RDth_DEL1=-FDth_DEL1 and
DEL3_Average=-0.043>-0.08=-RDth_DEL3=-FDth_DEL3.

Thus, a false judgment of a position having a decreased air pressure could be avoided. This case does not apply to any of the four judgment conditions B1 to B4. Thus, the position of a wheel having a decreased air pressure could not be identified.

The threshold value for position identification FDth_DEL3 and RDth_DEL3 regarding DEL3_Average was set in the manner as described below.

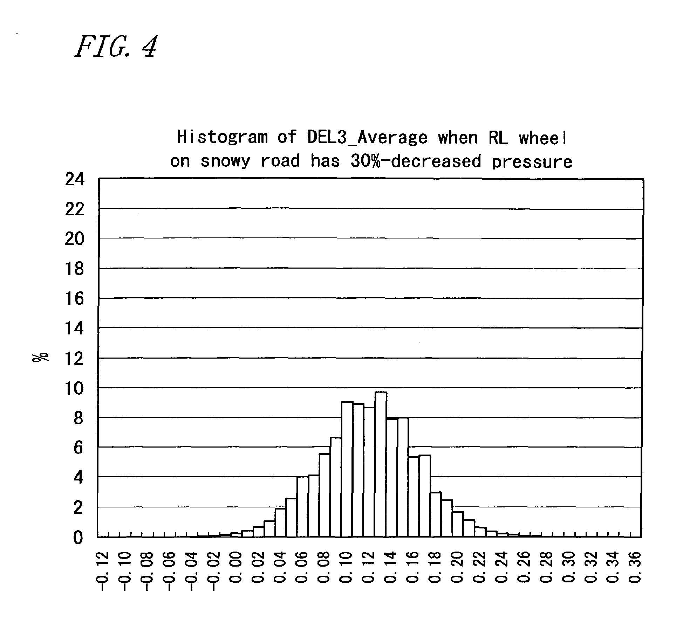

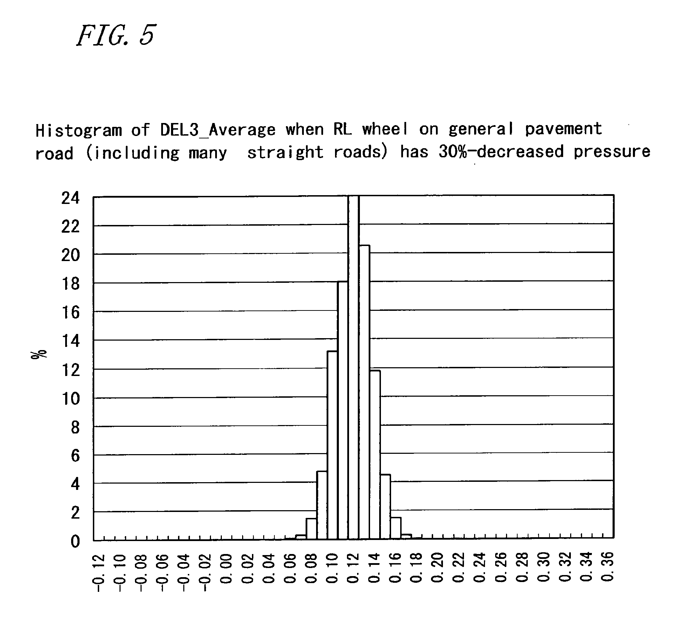

The test vehicle A with an RL wheel having a 30%-decreased air pressure was caused to run on a general pavement road and a snowy road in advance to acquire DEL3_Averages. The distribution of DEL3_Averages is shown in Fig. 4 (snowy road) and Fig. 5 (general pavement road (including many straight roads)). As can be seen from the respective statistical results, the standard deviation σ regarding the running on the general pavement road and the snowy road can be calculated. Any of the general pavement road and the snowy road shows substantially regular distribution.

In the case of a regular distribution, a range of values ±4.5 times the standard deviation with the average value at the center (=4.5σ) includes 99.9993% of the entirety. For example, in the case of a snowy road, an average value when an RL wheel and an FL wheel had a 30%-decreased air pressure was 0.12 and the standard deviation σ was 0.044. In this case, the range of 4.5σ with 0.12 at the center is from 0.12-0.044×4.5=-0.078≒-0.08 to 0.12+0.044×4.5=0.318≒0.32.

Similarly, when an FR wheel and an RR wheel had a 30%-decreased pressure, an average value was -0.12 and a standard deviation σ was 0.044. The range of 4.5σ with -0.12 at the center is from -0.12-0.044×4.5=-0.318≒0.32 to -0.12+0.044×4.5=0.078≒0.08.

When assuming that a border line 0.08 of the range of 4.5σ at which the plus sign and minus sign are reversed is a threshold value for position identification, DEL3_Average when an FR wheel and an RR wheel have a 30% decreased air pressure for example results in:

DEL3_Average>0.08=RDth_DEL3=FDth_DEL3.

This significantly reduces the probability at which an FL wheel or an RL wheel is falsely determined to have a decreased air pressure to (100-99.9993)/2=0.00035(%). In other words, a false determination can be avoided with a substantially 100% probability.

Similarly, DEL3_Average when an FL wheel and an RL wheel have a 30% decreased air pressure results in:

DEL3_Average<-0.08=RDth_DEL3=FDth_DEL3.

This significantly reduces the probability at which an FR wheel or an RL wheel is falsely determined to have a decreased air pressure to (100-99.9993)/2=0.00035(%). In other words, a false determination can be avoided with a substantially 100% probability.

In the case of a general pavement road, an average value when an RL wheel and an FL wheel had a 30%-decreased air pressure was 0.12 and the standard deviation σ was 0.017. The range of 4.5σ with 0.12 at the center is from 0.12-0.017×4.5=0.0435≒0.04 to 0.12+0.017×4.5=0.1965≒0.20.

Similarly, when an FR wheel and an RR wheel had a 30%-decreased air pressure, an average value was -0.12 and the standard deviation σ was 0.017. The range of 4.5σ with -0.12 at the center is from -0.12-0.017×4.5=-0.1965≒0.20 to -0.12+0.017×4.5=-0.0435≒-0.04.

When the FL wheel or the RL wheel has a 30%-decreased air pressure, the range including DEL3_Average at this probability of 99.9993% is 0.04 to 0.20 and is in the range from -0.04 to -0.20 when the FR wheel or the RR wheel has a 30%-decreased air pressure. Thus, when a smaller absolute value of 0.04 is assumed as a threshold value for position identification on a general pavement road, a position of a tire having a decreased pressure can be accurately identified with a 99.9993% or substantially 100% probability.

It is noted that the formulae in the present invention showing a judgment value of a decreased pressure of a tire are not limited to those described above. For example, the following formulae (11) to (13) also can be used so long as the formulae can represent a difference between diagonal wheels, front and rear wheels, and left and right wheels.

$$DEL1=\{(V1+V4)/(V2+V3)-1\}\times 100(\%)\cdots\cdots(11)$$

$$DEL2=\{(V1+V2)/(V3+V4)-1\}\times 100(\%)\cdots\cdots(12)$$

$$DEL3=\{(V1+V3)/(V2+V4)-1\}\times100(\%)\cdots\cdots(13)$$

Although the above-described illustrative embodiment changes the setting of a threshold value for position identification depending on the road status, the setting of a threshold value for position identification also can be changed depending on a vehicle turning level or also can be changed depending on whether the vehicle is running on an uphill or a downhill. Alternatively, the setting of a threshold value for position identification also can be changed depending on the combination of two or three of the road status, the inclination of a running road (uphill or downhill), and the turning level.

**Claims**

1.　A method of detecting a decrease in a tire air pressure based on wheel rotation information obtained from tires attached to a four-wheel vehicle, comprising:

> a step of calculating wheel rotation information obtained from the respective wheel tires;
> a step of computing a first judgment value obtained by dividing a difference in the sum of wheel rotation information between two pairs of wheel tires on diagonal lines by a predetermined average wheel speed, a second judgment value obtained by dividing a difference between a sum of wheel rotation information of front wheel tires and a sum of wheel rotation information of rear wheel tires by a predetermined average wheel speed, and a third judgment value obtained by dividing a difference between a sum of wheel rotation information of right wheel tires and a sum of wheel rotation information of left wheel tires by a predetermined average wheel speed;
> a step of storing the wheel rotation information, the first judgment value, the second judgment value, and the third judgment value;
> a step of setting judgment conditions for the first judgment value, the second judgment value, and the third judgment value with regard to the respective wheel tires; and
> a step of judging, based on the judgment conditions, a decrease in the air pressures of the respective wheel tires,

wherein the step of setting the judgment condition sets threshold values used for the judgment conditions depending on a status of a road on which a vehicle runs, a turning level of the vehicle, or a level of the running of the vehicle running on an uphill or a downhill.

2.　An apparatus of detecting a decrease in a tire air pressure based on wheel rotation information obtained from tires attached to a four-wheel vehicle, comprising:

> a rotation information detection means for calculating wheel rotation information obtained from the respective wheel tires;
> a judgment value computation means for computing a first judgment value obtained by dividing a difference in the sum of wheel rotation information between two pairs of wheel tires on diagonal lines by a predetermined average wheel speed, a second judgment value obtained by dividing a difference between a sum of wheel rotation information of front wheel tires and a sum of wheel rotation information of rear wheel tires by a predetermined average wheel speed, and a third judgment value obtained by dividing a difference between a sum of wheel rotation information of right wheel tires and a sum of wheel rotation information of left wheel tires by a predetermined average wheel speed;
> a storage means for storing the wheel rotation information, the first judgment value, the second judgment value, and the third judgment value;
> a judgment condition setting means for setting judgment conditions for the first judgment value, the second judgment value, and the third judgment value with regard to the respective wheel tires; and
> a judgment means for judging, based on the judgment conditions, a decrease in the air pressures of the respective wheel tires,

wherein the judgment condition setting means sets threshold values used for the judgment conditions depending on a status of a road on which a vehicle runs, a turning level of the vehicle, or a level of the running of the vehicle running on an uphill or a downhill.

3.　A program for determining a decrease in a tire air pressure for causing, in order to detect a tire having a decreased pressure based on wheel rotation information obtained fromtires attached to a four-wheel vehicle, a computer to function as:

a rotation information detection means for calculating wheel rotation information obtained from the respective wheel tires;

a judgment value computation means for computing a first judgment value obtained by dividing a difference in the sum of wheel rotation information between two pairs of wheel tires on diagonal lines by a predetermined average wheel speed, a second judgment value obtained by dividing a difference between a sum of wheel rotation information of front wheel tires and a sum of wheel rotation information of rear wheel tires by a predetermined average wheel speed, and a third judgment value obtained by dividing a difference between a sum of wheel rotation information of right wheel tires and a sum of wheel rotation information of left wheel tires by a predetermined average wheel speed;

a storage means for storing the wheel rotation information, the first judgment value, the second judgment value, and the third judgment value;

a judgment condition setting means for setting judgment conditions for the first judgment value, the second judgment value, and the third judgment value with regard to the respective wheel tires; and

a judgment means for judging, based on the judgment conditions, a decrease in the air pressures of the respective wheel tires,

wherein the judgment condition setting means sets threshold values used for the judgment conditions depending on a status of a road on which a vehicle runs, a turning level of the vehicle, or a level of the running of the vehicle running on an uphill or a downhill.

*FIG. 1*

FL

FR

1

1

RL

RR

2

3  4  5

*FIG. 2*

## *FIG. 3*

S1 — Sequentially calculate DEL1, DEL2, and DEL3.

S2 — Is there a possibility of a decreased pressure? —No→

↓Yes

S3 — Acquire and store DEL1, DEL2, and DEL3 together with then road distinguishing index value, lateral G and torque.

↓

S4 — Does a countup value for acquiring an average value satisfy N=60 for example? —No→

↓Yes

S5 — Decide a threshold value for position identification depending on a running road, a lateral G and torque until N=60 is reached. At the same time, calculate average values DEL1_Average, DEL2_Average, and DEL3_Average for DEL1, DEL2, and DEL3.

↓

S10

S6 — DEL1_Average>FDth_DEL1_selected
DEL2_Average>FDth_DEL2_selected
DEL3_Average>FDth_DEL3_selected —Yes→ FL wheel has a decreased pressure. Raise an alarm to the driver.

↓No

S11

S7 — DEL1_Average<−FDth_DEL1_selected
DEL2_Average>FDth_DEL2_selected
DEL3_Average<−FDth_DEL3_selected —Yes→ FR wheel has a decreased pressure. Raise an alarm to the driver.

↓No

S12

S8 — DEL1_Average<−FDth_DEL1_selected
DEL2_Average<−FDth_DEL2_selected
DEL3_Average>FDth_DEL3_selected —Yes→ RL wheel has a decreased pressure. Raise an alarm to the driver.

↓No

S13

S9 — DEL1_Average>FDth_DEL1_selected
DEL2_Average<−FDth_DEL2_selected
DEL3_Average<−FDth_DEL3_selected —Yes→ RR wheel has a decreased pressure. Raise an alarm to the driver.

↓No

S14 — Position having a decreased pressure could not be identified.

FIG. 4

Histogram of DEL3_Average when RL wheel
on snowy road has 30%-decreased pressure

## FIG. 5

Histogram of DEL3_Average when RL wheel on general pavement road (including many  straight roads) has 30%-decreased pressure

FIG. 6

Histogram of DEL3_Average when RL wheel on
mountain road has 30%-decreased pressure

## FIG. 7(a)

### Course including many straight roads

## FIG. 7(b)

### (Mountain) course including few straight roads

*FIG. 8 (a)*

## Course including many straight roads

Appearance rate [%]

*FIG. 8 (b)*

## (Mountain) course including few straight roads

Appearance rate [%]

Europäisches
Patentamt

European
Patent Office

Office européen
des brevets

# EUROPEAN SEARCH REPORT

Application Number

EP 09 00 3758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2005 053263 A (SUMITOMO RUBBER IND) 3 March 2005 (2005-03-03) * abstract; figures 1-4 * ----- | 1 | INV. B60C23/06 |
| A | EP 1 547 828 A (SUMITOMO RUBBER IND [JP]) 29 June 2005 (2005-06-29) * page 5, paragraph 26 - page 7, paragraph 38; figures 1,2 * ----- | 1 | |
| A | EP 1 640 189 A (SUMITOMO RUBBER IND [JP]) 29 March 2006 (2006-03-29) * page 5, paragraph 36 - page 7, paragraph 46; figures 1,2 * ----- | 1 | |
| A | EP 1 433 627 A (SUMITOMO RUBBER IND [JP]) 30 June 2004 (2004-06-30) * page 3, paragraph 14 - page 5, paragraph 28; figures 1-3 * ----- | 1 | |
| A | EP 0 554 131 A (HONDA MOTOR CO LTD [JP]) 4 August 1993 (1993-08-04) * column 4, line 15 - column 11, line 31; figures 1,2 * ----- | 1 | TECHNICAL FIELDS SEARCHED (IPC) B60C |
| A | EP 0 783 983 A (SUMITOMO RUBBER IND [JP]; SUMITOMO ELECTRIC INDUSTRIES [JP]) 16 July 1997 (1997-07-16) * page 4, line 6 - page 8, line 11; figures 1-9 * ----- | 1 | |
| A | WO 02/068226 A (TOYOTA MOTOR CO LTD [JP]; KOJIMA HIROYOSHI [JP]; INOUE HIDEO [JP]) 6 September 2002 (2002-09-06) * abstract; figures 1-4 * ----- | 1 | |

-/--

The present search report has been drawn up for all claims

| Place of search | Date of completion of the search | Examiner |
|---|---|---|
| Munich | 30 June 2009 | Lendfers, Paul |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 09 00 3758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 371 507 A (SUMITOMO RUBBER IND [JP]) 17 December 2003 (2003-12-17) * page 3, paragraph 17 - page 4, paragraph 32; figures 1,2 * ----- | 1 | |
| A | EP 1 306 235 A (SUMITOMO RUBBER IND [JP]; SUMITOMO ELECTRIC INDUSTRIES [JP]) 2 May 2003 (2003-05-02) * page 3, paragraph 13 - page 5, paragraph 23; figures 1-7 * ----- | 1 | |
| | | | TECHNICAL FIELDS SEARCHED (IPC) |

The present search report has been drawn up for all claims

| Place of search | Date of completion of the search | Examiner |
|---|---|---|
| Munich | 30 June 2009 | Lendfers, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 3758

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2009

| Patent document cited in search report | | Publication date | Patent family member(s) | | Publication date |
|---|---|---|---|---|---|
| JP 2005053263 | A | 03-03-2005 | NONE | | |
| EP 1547828 | A | 29-06-2005 | KR | 20050050537 A | 31-05-2005 |
| | | | US | 2008255719 A1 | 16-10-2008 |
| | | | US | 2005113992 A1 | 26-05-2005 |
| EP 1640189 | A | 29-03-2006 | CN | 1752731 A | 29-03-2006 |
| | | | JP | 2006088908 A | 06-04-2006 |
| | | | US | 2006076095 A1 | 13-04-2006 |
| EP 1433627 | A | 30-06-2004 | JP | 2004203214 A | 22-07-2004 |
| | | | US | 2004134269 A1 | 15-07-2004 |
| EP 0554131 | A | 04-08-1993 | DE | 69305374 D1 | 21-11-1996 |
| | | | DE | 69305374 T2 | 27-02-1997 |
| | | | JP | 2780887 B2 | 30-07-1998 |
| | | | JP | 5213019 A | 24-08-1993 |
| | | | US | 5343741 A | 06-09-1994 |
| EP 0783983 | A | 16-07-1997 | DE | 69705549 D1 | 16-08-2001 |
| | | | DE | 69705549 T2 | 31-10-2001 |
| | | | JP | 3150893 B2 | 26-03-2001 |
| | | | JP | 9188114 A | 22-07-1997 |
| | | | US | 5771480 A | 23-06-1998 |
| WO 02068226 | A | 06-09-2002 | CA | 2439253 A1 | 06-09-2002 |
| | | | CN | 1529663 A | 15-09-2004 |
| | | | DE | 60205340 D1 | 08-09-2005 |
| | | | DE | 60205340 T2 | 23-03-2006 |
| | | | EP | 1363793 A1 | 26-11-2003 |
| | | | US | 2003121319 A1 | 03-07-2003 |
| EP 1371507 | A | 17-12-2003 | DE | 60315379 T2 | 29-11-2007 |
| | | | JP | 3869762 B2 | 17-01-2007 |
| | | | JP | 2004017716 A | 22-01-2004 |
| | | | US | 2003233209 A1 | 18-12-2003 |
| EP 1306235 | A | 02-05-2003 | US | 2003080863 A1 | 01-05-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63305011 A

- JP 2005053263 A